# FASCICULE DE BREVET EUROPEEN

(11) **EP 0 547 453 B1**
(45) Date de publication et mention de la délivrance du brevet: **31.07.1996**
(21) Numéro de dépôt: 92120777.5
(22) Date de dépôt: 05.12.1992
(51) Int. Cl.: B23B 31/16, B23B 13/12

(54) **Dispositif de serrage d une barre de matière**
Spannvorrichtung einer Werkstoffstange
Clamping device for stock

(30) Priorité: 10.12.1991 FR 9115415
(43) Date de publication de la demande: 23.06.1993
(73) Titulaire: Habegger, Harold, CH-2738 Court (CH)
(72) Inventeur: Habegger, Harold, CH-2738 Court (CH)
(74) Mandataire: de Raemy, Jacques

(56) Documents cités:
- DE-A- 3 802 982

## Description

L'invention concerne un dispositif de serrage d'une barre de matière, selon le preambule de la revendication 1. Un tel dispositif est connu d'après le document DE-A-38 02 982.

Plus particulièrement, elle concerne un dispositif de serrage d'une barre, notamment destiné à équiper une machine-outil, telle qu'un tour d'usinage, par exemple du type automatique, permettant le tournage en long, c'est-à-dire l'usinage par déplacement d'un ou de plusieurs outils de travail selon l'axe longitudinal de la barre.

Dans ce type de machine, on cherche à faire travailler les outils avec un enlèvement maximal des copeaux, ce qui induit des efforts de coupe extrèmement élevés. La barre à usiner doit donc être serrée très fortement au niveau de la poupée du tour .

Pour fournir de tels efforts, les dispositifs classiques ont été conçus de façon volumineuse, avec un encombrement et une inertie préjudiciables à leur fonctionnement. De plus, ces dispositifs présentent généralement une tendance à s'user rapidement.

Ainsi, la présente invention a-t-elle pour but de fournir un dispositif de serrage qui soit de construction simple, compacte et robuste.

A cet effet, l'invention a pour objet un dispositif de serrage d'une barre de matière destiné notamment à équiper une poupée d'un tour d'usinage, du type comprenant :
- des moyens de serrage comportant des mors mobiles et guidés en direction radiale par rapport à la barre de matière, ces mors étant susceptibles d'occuper au moins deux positions radiales caractéristiques dites de fermeture et d'ouverture pour respectivement serrer et relâcher ladite barre,
- un mécanisme de fermeture desdits mors, conformé pour fournir aux mors un effort de prise destiné à assurer le serrage de ladite barre,
- des moyens de retenue destinés à maintenir les mors dans leur position d'ouverture en l'absence d'effort fourni par le mécanisme de fermeture, et
- des moyens de pilotage pour commander, par un mouvement de translation sensiblement coaxial à la barre l'actionnement du mécanisme de fermeture et des moyens de retenue, ces moyens de pilotage étant montés libres en rotation par rapport audit mécanisme de fermeture,
caractérisé en ce que le mécanisme de fermeture comporte un ensemble de rouleaux de structure essentiellement pleine, interposés respectivement entre des éléments d'appui du mécanisme de fermeture et les mors et pouvant être roulés entre ceux-ci par ce mécanisme lorsqu'il est translaté par les moyens de pilotage, chacun de ces rouleaux coopérant avec des rampes ménagées respectivement sur les éléments d'appui dudit mécanisme et sur les mors pour solliciter les mors radialement et assurer leur serrage sur la barre.

Par ailleurs, les rampes des mors sont ménagées directement au droit de faces intérieures desdits mors, venant appuyer sur la barre.

On précisera aussi que la rampe de chaque élément d'appui est orientée parallèlement à la rampe correspondante du mors précité.

De plus, lesdites rampes respectivement des mors et des éléments d'appui sont inclinées selon une pente négative, vers la barre de matière, en direction d'une région usinée de cette barre.

Mais d'autres caractéristiques et avantages de l'invention apparaîtront mieux à la lecture de la description détaillée qui suit, prise en référence aux dessins annexés qui sont donnés à titre d'exemple, et dans lesquels :
- les figures 1 et 2 représentent en demi-coupe longitudinale un dispositif de serrage selon un premier mode de réalisation de l'invention, respectivement dans des positions de relâchement et de serrage d'une barre de matière à usiner;
- la figure 3 est une vue partielle en coupe longitudinale faite selon les flèches III-III de la figure 4, et représentant un galet muni de son axe à l'intérieur d'un logement d'un mécanisme de fermeture du dispositif des figures 1 et 2;
- la figure 4 est une vue de face du dispositif des figures 1 et 2, faite selon la flêche IV de la figure 1, mais ne représentant que certains éléments de l'invention nécessaires à sa compréhension;
- les figures 5 et 6 représentent en demi-coupe longitudinale un dispositif de serrage selon un second mode de réalisation de l'invention, respectivement dans des positions de relâchement et de serrage d'une barre de matière; et
- la figure 7 est une vue de face du dispositif des figures 5 et 6, faite selon la flèche VII de la figure 5.

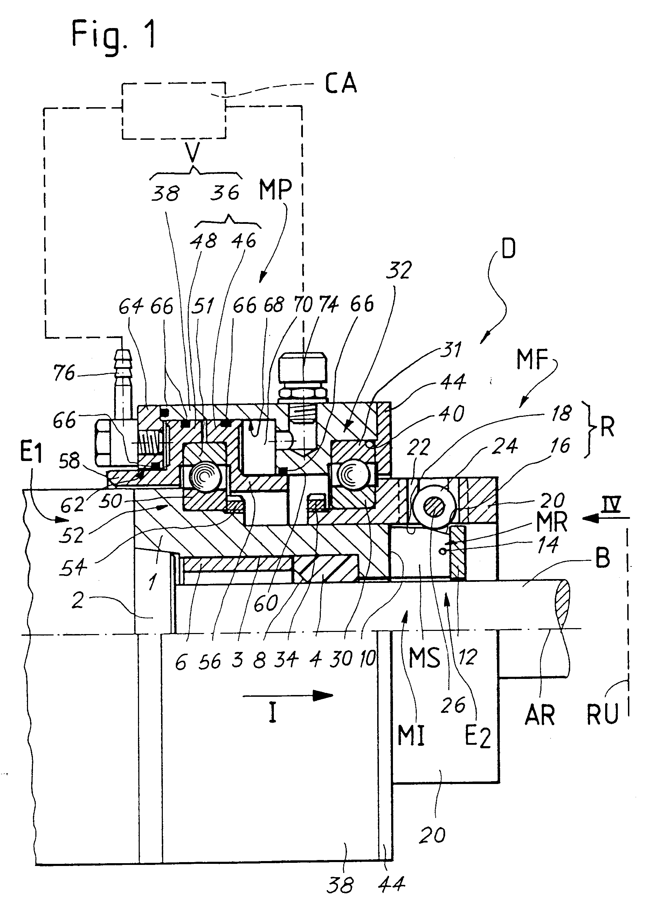

En se référant désormais aux figures 1 à 4, on décrira ci-après un premier mode de réalisation du dispositif selon l'invention, dispositif qui est désigné sur les figures par la référence générale D.

Le dispositif D comporte un corps cylindrique 1 qui est de forme essentiellement tubulaire et qui est monté de façon classique par une extrémité E1, dite extrémité arrière, sur une extrémité correspondante d'une poupée 2 d'un tour d'usinage, par exemple du type automatique, ici non représenté.

A l'intérieur du corps cylindrique tubulaire 1, et plus particulièrement dans un chambrage 3 ménagé dans celui-ci, est logée une bague annulaire de guidage 4 qui est réalisée en un matériau plastique, tel que de la résine acétale et qui est destinée à recevoir intérieurement et à guider en direction radiale une barre de matière à usiner, référencée B. La bague de guidage 4 est maintenue axialement dans le corps 1 en étant maintenue en appui latéral, d'une part contre le fond du chambrage 3, et d'autre part dans ce premier mode de réalisation, contre un manchon tubulaire 6 monté à force dans ledit chambrage.

La bague de guidage 4 comporte un chanfrein d'entrée 8 permettant l'introduction de la barre de matière B dans des mors de serrage MS que l'on décrira en détail ci-après. On notera ici que la bague de guidage 4 a pour fonction, premièrement, d'éviter le contact métal-métal entre la barre B et les éléments métalliques du dispositif D, tels que le corps 1, lors de l'introduction de cette barre dans le dispositif D (dans la direction d'introduction représentée par la flêche I), et deuxièmement de centrer cette barre par rapport à un axe de rotation AR de la poupée 2, axe qui est en position normale confondu avec l'axe géométrique longitudinal de la barre B.

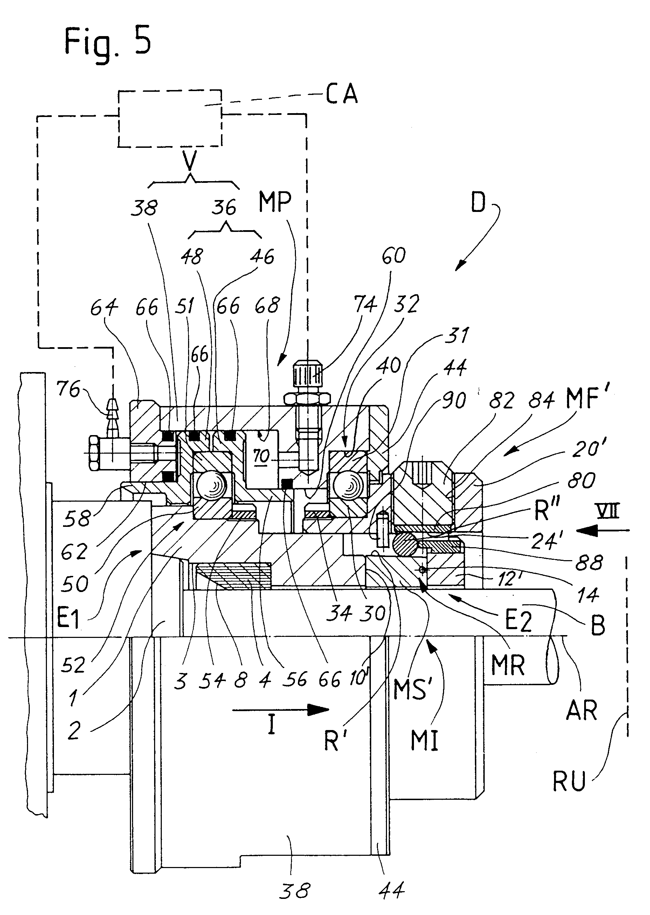

Le corps cylindrique tubulaire 1 comporte en bout plusieurs rainures radiales 10 (dans cet exemple au nombre de trois) qui sont ménagées dans une extrémité libre E2 du corps 1, dite extrémité avant, et qui débouchent en direction radiale (figure 4), intérieurement en regard de la barre B et extérieurement en regard d'un mécanisme de fermeture MF. Ces rainures radiales 10 sont fermées axialement par une plaque annulaire 12 fixée sur le corps 1 par des vis, non représentées.

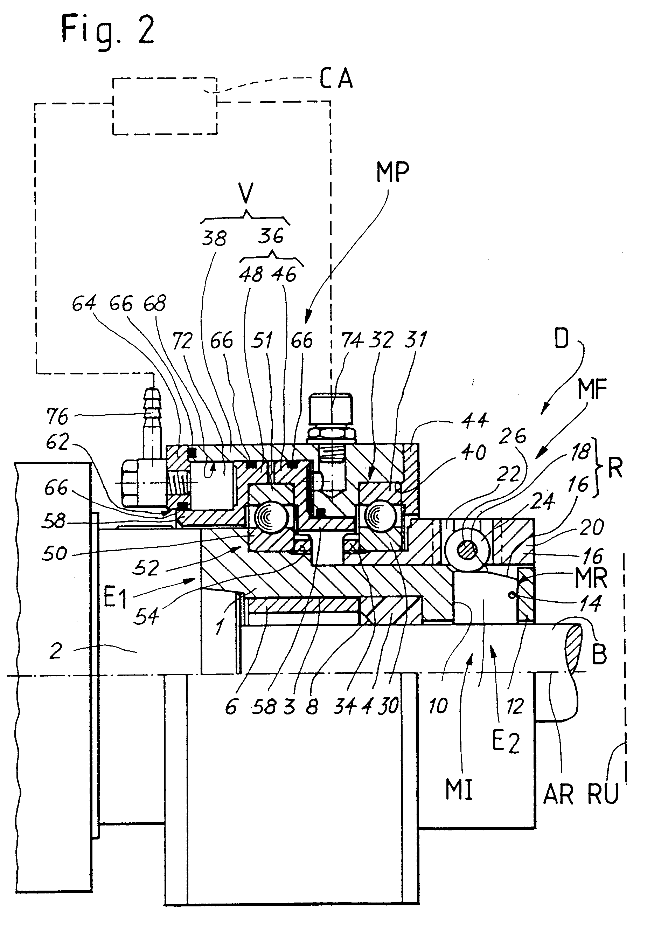

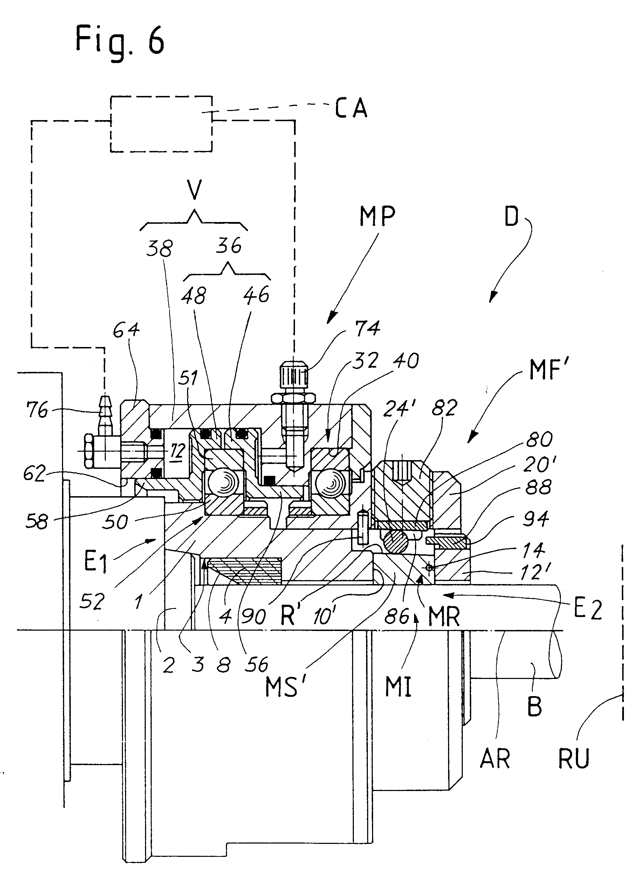

Les mors de serrage MS (trois dans cet exemple) sont respectivement engagés dans les rainures 10 et sont guidés en direction radiale dans ces rainures pour pouvoir se déplacer par rapport à la barre B. Les mors de serrage MS qui forment des moyens de prise MI de la barre B sont donc mobiles dans le corps 1, et peuvent occuper deux positions radiales caractéristiques par rapport à cette barre. Ces positions qui sont dites d'ouverture et de fermeture sont respectivement représentées aux figures 1 et 2 pour le premier mode de réalisation du dispositif selon l'invention et aux figures 5 et 6 pour le deuxième mode de réalisation.

On comprendra ci-après que la position d'ouverture des mors de serrage MS correspond à leur état de repos, tandis que la position de fermeture de ces mors correspond à leur état sollicité.

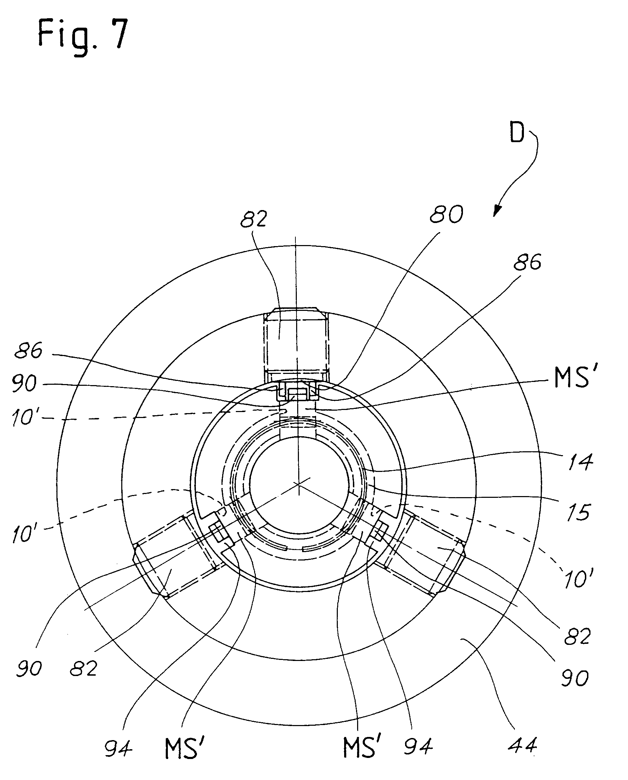

A cet effet, le dispostif D selon l'invention comporte des moyens de rappel ou de retenue MR constitués par un fil-ressort 14 de forme torique (figure 7) et ouvert, ce fil-ressort 14 traversant les trois mors MS latéralement tandis qu'il est disposé de façon coaxiale à l'axe AR. Le fil-ressort 14 est engagé par ailleurs dans une rainure circulaire 15 ménagée en bout dans le corps 1, au voisinage de son extrémité libre E2, et fermée par la plaque annulaire 12. Les mors MS sont donc ramenés automatiquement dans leur position d'ouverture en l'absence de sollicitation extérieure

Les mors MS présentent chacun une face intérieure, non référencée, ménagée en regard de la barre B, cette face présentant une forme partiellement cylindrique conformée pour venir épouser le pourtour extérieur de la barre B. Ainsi, en position de fermeture (figures 2 et 6), les mors peuvent serrer la barre B très fortement pour l'entraîner en rotation de façon concomitante au déplacement angulaire de la poupée 2, à l'encontre de l'action de coupe du ou des outils d'usinage, non représentés.

Pour cela, le dispositif selon l'invention comporte un mécanisme MF de fermeture des mors, mécanisme qui, comme on le comprendra ci-après, offre de plus une fonction de multiplication de l'effort permettant la commande de fermeture des mors, effort qui est fourni par des moyens de pilotage MP.

Les mors MS présentent en outre chacun une face extérieure (non référencée) qui est opposée à la face intérieure précitée et qui est disposée en regard du mécanisme de fermeture MF, et sur laquelle est ménagée une rampe R. Dans le cas du premier mode de réalisation tel qu'ici décrit, la rampe R est une rampe progressive puisqu'elle est étagée et comporte deux sections contigües d'inclinaisons différentes.

En prenant pour référence les extrémités respectivement avant E1 (entrée de la barre B) et E2 (sortie de ladite barre) comme référence "avant" et "arrière", on remarque que la section avant 16 de la rampe R est plus inclinée que la section arrière 18 qui lui est contigüe.

La rampe R est dite à inclinaison négative puisque les sections 16 et 18 qui la forment fuient vers la barre B (et vers l'axe centrale AR) dans la direction arrière-avant (arrière vers l'avant) du dispositif .

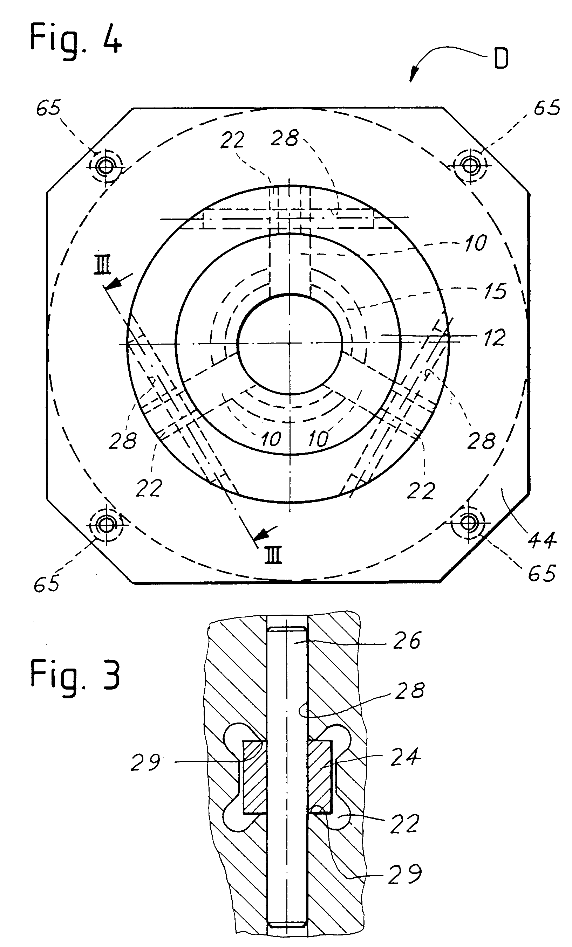

Le mécanisme de fermeture MF comporte un manchon ou bague de pression ou de poussée 20 qui enveloppe les mors MS, ainsi que l'extrémité libre E2 du corps 1. La bague de pression ou de poussée 20 peut coulisser en direction axiale directement sur le pourtour extérieur du corps 1, et notamment sur son extrémité libre E2. La bague 20 présente des ouvertures radiales 22 (ici au nombre de trois) débouchant vers l'intérieur du dispositif, sensiblement en regard respectivement des rainures 10 et des mors MS. A l'intérieur de ces ouvertures radiales 22 qui ont, en vue de dessus (figure 3), une forme de trêfle pour dégager leurs coins, sont logés des galets presseurs 24 de forme cylindrique tubulaire, montés libres en rotation par l'intermédiaire de goujons 26 engagés dans ceux-ci. Les goujons 26 sont engagés et maintenus (par exemple par des vis non représentées) respectivement à l'intérieur de forures 28 (figures 3 et 4) qui sont ménagées et orientées selon des cordes géométriques, dans la bague de pression ou de poussée 20. Les galets 24, qui sont dans ce mode de réalisation attelés à la bague 20, peuvent se déplacer et notamment rouler selon une direction parallèle à l'axe AR.

Chaque galet 24 est guidé latéralement par deux faces latérales 29 ménagées dans chacune des ouvertures radiales 22. Les galets 24 sont en contact directement et de façon respective sur les rampes R, et pénètrent sensiblement dans les rainures 10. Ainsi, la bague 20 et les galets 24 (c'est-à-dire tout le mécanisme de fermeture MF) sont liés en rotation au corps 1 et aux mors MS, et ces éléments peuvent se déplacer ensemble en rotation avec la poupée 2 et avec la barre B, quand celle-ci est serrée. Sur l'arrière de la bague de pression ou de poussée 20 est engagée une bague intérieure 30 d'un premier moyen de guidage en rotation, constitué ici par un roulement classique à une rangée de billes 32. La bague intérieure 30 est montée, dans ce mode de réalisation, librement sur une portée arrière non référencée de la bague de pression ou de poussée 20, et son déplacement (jeu) axial est limité par un premier écrou à crans 34 vissé sur ladite bague 20.

Le dispositif selon l'invention comporte en outre des moyens de pilotage MP qui, comme on le comprendra, sont susceptibles de commander l'actionnement du mécanisme de fermeture MF ainsi que l'actionnement des moyens de rappel ou de retenue MR par un mouvement de translation parallèle à, et sensiblement centré sur, l'axe AR, mouvement qui est donc sensiblement coaxial à la barre B.

Les moyens de pilotage MP sont constitués d'un vérin V à commande du type pneumatique, double effet, ce vérin étant pourvu d'un piston 36 et d'un cylindre 38.

A l'intérieur du cylindre 38, et en particulier dans sa partie avant située du côté du mécanisme de fermeture MF, est ménagé un premier chambrage 40 dans lequel est logée une bague extérieure 31 appartenant au roulement 32. Cette bague 31 est maintenue fixement dans le chambrage 40 par une plaque de fermeture 44, dite plaque de fermeture avant, montée fixement sur le cylindre 38 autour et à une faible distance de la bague de pression ou de poussée 20.

Le piston 36 est constitué de deux flasques respectivement avant 46 et arrière 48 qui sont montés de part et d'autre d'un second moyen de guidage en rotation 52, de même formé par un roulement classique à une rangée de billes (même référence), et qui sont appliqués latéralement contre ce roulement 52.

Le second roulement 52 comporte une bague intérieure 50 qui est engagée et maintenue axialement sur le corps cylindrique 1 (sur une portée épaulée non référencée ménagée sur une partie arrière de celui-ci) par l'intermédiaire d'un second écrou à crans 54 vissé sur le corps 1. Le second roulement 52 comporte une bague extérieure 51 sur laquelle sont engagés librement les flasques 46 et 48.

A cet effet, les flasques 46 et 48 comportent respectivement des chambrages (non référencés) se faisant face et dans lesquels est logée en partie la bague extérieure 51. Les flasques 46 et 48 comportent respectivement des portées tubulaires cylindriques 56 et 58 qui s'étendent depuis le roulement 52, de part et d'autre de celui-ci.

La portée 56 s'étend vers l'avant du dispositif D et elle est engagée par un ajustement glissant dans un alésage 60 ménagé dans le cylindre 38, derrière le premier roulement 32.

Par aileurs, la portée 58 s'étend vers l'arrière du dispositif D et elle est engagée par un ajustement glissant dans un second alésage 62 ménagé dans une seconde plaque de fermeture 64, dite plaque de fermeture arrière, la plus proche (par rapport à la première plaque 44) de la poupée 2. Le cylindre 38 du vérin V est donc essentiellement guidé en translation par son ajustement glissant sur les portées 56 et 58.

La plaque de fermeture arrière 64 est maintenue fixement solidaire du cylindre 38 grâce à des ensembles vis-écrous classiques 65 (figure 4) disposés à l'extérieur du cylindre 38 et engagés dans la plaque de fermeture avant 44.

Entre l'alésage 62 et la portée 58, ainsi qu'entre l'alésage 60 et la portée 56 sont interposés des joints d'étanchéité, par exemple toxiques, portant une référence commune 66. Un autre joint du même type (même référence) est logé en bout dans le cylindre 38 et porte axialement sur la plaque de fermeture arrière 64.

Les deux flasques 46 et 48 sont par ailleurs engagés et peuvent axialement coulisser dans un second chambrage 68 formant chemise, ménagé dans le cylindre 38 de façon adjacente à l'alésage 60.

A l'intérieur de ce chambrage 68 et de part et d'autre du piston 36 constitué par les deux flasques 46 et 48, sont formées deux chambres annulaires respectivement 70 (figure 1) et 72 (figure 2), dites respectivement chambre de poussée et chambre de traction.

Dans les chambres 70 et 72 débouchent des conduits d'air sous pression respectivement 74 et 76 qui permettent chacun tantôt l'admission, tantôt l'échappement d'air sous pression, de façon alternée pour actionner le vérin V. Ces conduits sont alimentés par un circuit d'air sous pression CA représenté ici de façon très schématique. On remarquera que le cylindre 38 est maintenu fixe en rotation (par rapport au bâti du tour, non représenté) uniquement par le circuit d'air CA, et notamment par ses conduits souples de même non représentés, ou éventuellement dans un mode de réalisation non représenté par un système conventionnel de guidage en translation à jeu radial.

Les flasques 46 et 48 comportent respectivement à leur périphérie des joints d'étancheité en appui sur la chemise 68, ces joints qui assurent en partie l'étanchéité des chambres 70 et 72 sont du même type que ceux précédemment décrits et portent la référence commune 66.

On précisera ici que le piston 36 formé des deux flasques 46 et 48 est maintenu fixe en rotation à l'intérieur du chambrage 68, c'est-à-dire par rapport au cylindre 38, grâce aux pressions pneumatiques engendrées dans les deux chambres 70 et 72 et grâce au frottement des joints périphériques 66 des deux flasques 46 et 48 dans la chemise 68.

Toutefois, le cylindre 38 peut coulisser et se translater selon l'axe AR sous l'action de la pression d'air engendrée soit dans la chambre 70, soit dans la chambre 72. De plus, le mécanisme de fermeture MF peut coulisser et se translater, selon le même axe, avec le cylindre 38 puisque ce mécanisme de fermeture MF est attelé au cylindre 38, et est donc attelé aux moyens de pilotage MP par l'intermédiaire du premier moyen de guidage en rotation, formé par le premier roulement 32.

Le piston 36, quant à lui, est maintenu fixe en translation puisqu'il est solidaire du second roulement 52 qui est calé sur le corps 1 qui est lui même vissé sur la poupée 2. Ce piston 36 est toutefois monté libre en rotation par rapport au corps 1 et par rapport aux mors MS, par l'intermédiaire du second roulement 50.

Les moyens de pilotage MP, grâce aux deux roulements 32 et 52, sont montés libres en rotation par rapport au mécanisme de fermeture MF qui, lui, est intégralement assujetti au mouvement rotatif des mors MS à cause de la liaison latérale entre les galets 24 et les rainures 22, et de la liaison radiale en ces galets 24 et les rampes R des mors MS.

Le fonctionnement de ce dispositif est le suivant.

Pour débuter l'usinage, c'est-à-dire lors de l'introduction d'une barre de matière a depuis l'extrémité E1, le dispositif D est maintenu dans la position représentée à la figure 1. Le conduit 76 est mis à l'échappement, tandis que de l'air sous pression est amené dans le conduit 74 et engendre une pression pneumatique dans la chambre de poussée 70. Le cylindre 38 est donc maintenu dans sa position avancée et retient dans la position avant correspondante le mécanisme de fermeture MF, à savoir la bague de pression ou de poussée 20 et les galets 24, qui se trouvent à l'état poussé. Les galets 24 reposent respectivement sur la section avant 16 des rampes R, sans les solliciter. Les mors MS sont retenus dans leur position d'ouverture à une certaine distance de la barre B uniquement grâce à l'action des moyens de rappel ou de retenue MR, formés par le ressort-fil 14.

Lorsque la barre B a été complétement introduite dans le dispositif D et qu'elle fait suffisamment saillie à l'extérieur, on serre la barre B comme représenté à la figure 2.

Comme on le voit sur cette figure, le cylindre 38 est tiré vers l'arrière par la mise à l'échappement du conduit 74 et par l'augmentation de la pression d'air dans la chambre de traction 72, pression qui est amenée au travers du conduit 76. Dès lors, le mécanisme de fermeture MF, donc la bague de pression ou de poussée 20 et les galets 24 sont tirés vers l'arrière. Les galets 24 roulent sur les rampes correspondantes 18 et sollicitent les mors MS qui se déplacent radialement vers et contre la barre de matière B.

La très faible inclinaison de la section arrière 18 de la rampe R, sur laquelle roulent les galets 24, permet de multiplier l'effort de poussée radial sur les mors MS, par rapport à l'effort de traction axial fourni par les moyens de pilotage MP. On comprend donc que le mécanisme de fermeture MF forme de plus un moyen de multiplication entre l'effort de commande et l'effort sur les mors, et donc sur la barre B.

De plus, grâce à cette faible inclinaison des rampes R, ce dispositif s'avère être autobloquant puisqu'en position de fermeture des mors, telle qu'ici décrit et vu à la figure 2, le galets 24 restent stables en position sur les mors MS. La pression de fonctionnement dans la chambre 72 peut donc être relâchée et le roulement 32 peut être libéré de sa sollicitation axiale. Par ailleurs, on remarquera que l'inclinaison des rampes R est telle qu'elles sont orientées selon une pente négative, c'est-à-dire vers la barre B, dans le sens avant du dispositif, et donc vers une région usinée de la barre B, représentée ici de façon trés schématique par les traits interrompus RU. Cette inclinaison fait que les efforts de coupe lors de l'usinage de la barre B sont orientés selon l'axe AR dans un même sens que les efforts de serrage (composante axiale) sur la barre B, ce qui améliore la précision du serrage.

A la fin de l'usinage, pour pouvoir effectuer l'avance de la barre B, on relâche les mors MS en augmentant la pression d'air dans la chambre de poussée 70 et en mettant à l'échappement la chambre de traction 72, ce qui pousse le cylindre 38 et le mécanisme de fermeture MF (bague 20 et galets 24) vers l'avant. Les galets reviennent sur la section avant 16 des rampes R et libérent les mors MS.

Ainsi, en l'absence d'effort de fermeture fourni par le mécanisme de fermeture MF, et étant donné que les mors MS sont sollicités vers leur position d'ouverture essentiellement par les moyens de rappel ou de retenue MR (par le ressort-fil 14) notamment en arrêt de broche, ils s'écartent de la barre B et la relâchent.

Dans le cas où l'ouverture est effectuée lors de la rotation de la broche, le relâchement est amélioré par l'action de la force centrifuge qui tend à écarter les mors MS vers l'extérieur.

En se référant désormais aux figures 5 à 7, on décrira ci-après le deuxième mode de réalisation du dispositif selon l'invention.

Sur ces figures, les pièces similaires à celles du dispositif du premier mode de réalisation précédemment décrit portent les mêmes références.

On ne décrira ci-après que les différences essentiellles qui existent entre le premier et le second mode de réalisation. Ces différences portent essentiellement sur un mécanisme de fermeture MF' et sur la forme des rampes d'un ensemble de mors MS'.

Dans ce second mode de réalisation, les galets tubulaires attelés 24 sont remplacés par des rouleaux pleins 24' qui sont interposés et comprimés entre une bague de pression ou de poussée 20' et des rampes R' des mors MS'.

Plus particulièrement, la bague 20' du mécanisme de fermeture MF' comporte des éléments d'appui 80 constitués respectivement par des pastilles (même référence) qui peuvent être réglées, en position radiale, par rapport à la barre B, par des systèmes vis-écrou comportant des vis 82 engagées respectivement dans des taraudages radiaux débouchants 84 ménagés directement dans la bague de pression ou de poussée 20'.

Chaque pastille 80 comporte, en regard du mors qui lui est associé, une rampe R'' orientée parallèlement à la rampe correspondante R', et donc de même inclinaison que celle-ci.

Les pastilles 80 sont logées au moins en partie librement dans la bague 20', respectivement sous les vis 82, et elles présentent des ailes latérales 86 de part et d'autre de leur rampe R''. Les ailes latérales 86 sont destinées à guider le déplacement des rouleaux pleins 24' entre leurs rampes respectives R' et R'' lors des mouvements avant et arrière du mécanisme de fermeture MF'.

On remarquera par ailleurs que les rouleaux 24' en étant de structure essentiellement pleine ne coopèrent ici avec aucun axe support puisqu'ils sont emprisonnés et encagés, d'une part, latéralement entre les ailes 86, et d'autre part, radialement entre les pastilles 80 et les mors MS'. Ils ne subissent donc que des efforts de compression orientés de façon sensiblement radiale par rapport au dispositif D, mais aucun effort de cisaillement. Leur résistance aux contraintes, lors de la fermeture des mors MS', est donc très élevée.

Le mécanisme de fermeture MF' selon ce second mode de réalisation comporte par ailleurs des butées 88, dites butées avant, destinées à limiter le déplacement axial (roulement) des rouleaux pleins 24' sur leurs deux rampes respectives R' et R'', vers l'avant, lors de l'ouverture, et ces butées 88 étant ainsi destinées à assurer le retour des rouleaux 24' en une position initiale sur les mors correspondants lors de l'ouverture des mors. On obtient donc une initialisation de la position axiale des galets à chaque ouverture du dispositif D, dans celui-ci.

Ce mécanisme comporte par ailleurs des butées 90, dites butées arrière, limitant aussi le déplacement axial (roulement) des rouleaux 24' sur leurs deux rampes respectives R et R'', mais cette fois, lors de la fermeture des mors, c'est-à-dire lors du déplacement arrière du mécanisme MF'.

Les butées avant 88 sont constituées par des plots (même référence) montés fixement, par exemple par des vis non représentées, dans des rainures axiales débouchantes 94 (figures 6 et 7) ménagées à la périphérie d'une plaque annulaire 12'. Les butées 88 font saillies dans des rainures 10' dans lesquelles sont logés les mors MS'.

Les butées arrière 90 sont constituées par des goupilles (même référence) montées à force dans la bague 20' et faisant respectivement saillie vers l'intérieur du dispositif, dans les rainures 10'.

Pour permettre ce montage, les rainures 10' s'étendent axialement vers l'arrière, dans le corps 1, pour recevoir les goupilles 90. On remarquera que les rouleaux 24' et les ailes de guidage 86 sont intégralement logés dans ces rainures 10'.

Le fonctionnement du dispositif selon ce second mode de réalisation est similaire à celui du mode de réalisation précédent, sauf que lors des mouvements d'ouverture et de fermeture du mécanisme MF', les rouleaux 24', en étant déplacés par la partie attelée (bague 20') du mécanisme MF, roulent sous la bague 20' et ne sont plus directement tirés par celle-ci, comme c'est le cas dans le premier mode de réalisation.

## Revendications

1. Dispositif de serrage d'une barre de matière (B), destiné notamment à équiper une poupée d'un tour d'usinage, du type comprenant :
- des moyens de serrage comportant des mors (MS, MS') mobiles et guidés en direction radiale par rapport à la barre de matière (B), ces mors (MS, MS') étant susceptibles d'occuper au moins deux positions radiales caractéristiques dites de fermeture et d'ouverture pour respectivement serrer et relâcher ladite barre (B),
- un mécanisme de fermeture (MF, MF') desdits mors, conformé pour fournir aux mors un effort de prise destiné à assurer le serrage de ladite barre (B),
- des moyens de retenue (MR) destinés à maintenir les mors dans leur position d'ouverture en l'absence d'effort fourni par le mécanisme de fermeture (MF, MF'), et
- des moyens de pilotage (MP) pour commander, par un mouvement de translation sensiblement coaxial à la barre (B) l'actionnement du mécanisme de fermeture (MF, MF') et des moyens de retenue (MR), ces moyens de pilotage (MP) étant montés libres en rotation par rapport audit mécanisme de fermeture (MF, MF'),
caractérisé en ce que le mécanisme de fermeture (MF') comporte un ensemble de rouleaux (24') de structure essentiellement pleine, interposés respectivement entre des éléments d'appui (80) du mécanisme de fermeture (MF') et les mors et pouvant être roulés entre ceux-ci par ce mécanisme lorsqu'il est translaté par les moyens de pilotage (MP), chacun de ces rouleaux (24') coopérant avec des rampes (R', R'') ménagées respectivement sur les éléments d'appui (80) dudit mécanisme et sur les mors (MS, MS') pour solliciter les mors (MS, MS') radialement et assurer leur serrage sur la barre.

2. Dispositif de serrage selon la revendication 1, caractérisé en ce que les rampes (R') des mors (MS, MS') sont ménagées directement au droit de faces intérieures desdits mors, venant appuyer sur la barre.

3. Dispositif de serrage selon la revendication 1 ou 2, caractérisé en ce que la rampe (R'') de chaque élément d'appui (80) est orientée parallèlement à la rampe correspondante (R') du mors (MS, MS') précité.

4. Dispositif de serrage selon l'une des revendications 1 à 3, caractérisé en ce que lesdites rampes (R', R'') respectivement des mors (MS, MS') et des éléments d'appui (80) sont inclinées selon une pente négative, vers la barre de matière (B), en direction d'une région usinée (RU) de cette barre.

5. Dispositif de serrage selon l'une des revendications 1 à 4, caractérisé en ce qu'il comporte des moyens de réglage (82) pour régler la position radiale des éléments d'appui (80) par rapport à la barre (B).

6. Dispositif de serrage selon la revendication 5, caractérisé en ce que les moyens de réglage (82) comportent un système vis-écrou (82, 84).

7. Dispositif de serrage selon l'une quelconque des revendications précédentes, caractérisé en ce que les éléments d'appui (80) sont logés dans une bague de poussée (20') qui enveloppe lesdits mors (MS, MS').

8. Dispositif de serrage selon l'une quelconque des revendications précédentes, caractérisé en ce que les éléments d'appui comportent des pastilles (80) sur lesquelles sont ménagées ledites rampes (R'').

9. Dispositif de serrage selon les revendications 7 et 8, caractérisé en ce que lesdites pastilles sont logées, au moins en partie, librement à l'intérieur de la bague de poussée (20').

10. Dispositif de serrage selon la revendication 8 ou 9, caractérisé en ce que lesdites pastilles présentent des ailes latérales (86) ménagées de part et d'autre desdites rampes (R'') et destinées à guider le déplacement des rouleaux (24') entre leurs rampes respectives (R', R'').

11. Dispositif de serrage selon l'une quelconque des revendications précédentes, caractérisé en ce que le mécanisme de fermeture (MF, MF') comporte des butées (88, 90) destinées à limiter le déplacement axial des rouleaux (24') sur leurs rampes (R', R'') et à assurer le retour de ces rouleaux (24') en une position initiale.

12. Dispositif de serrage selon l'une quelconque des revendications précédentes, caractérisé en ce que les moyens de pilotage (MP) sont constitués d'un vérin (V) à commande du type pneumatique pourvu d'un piston (36) et d'un cylindre (38), ledit piston (36) qui est monté libre en rotation par rapport auxdits mors par l'intermédiaire d'un roulement (50) étant constitué de deux flasques (46, 48) montés de part et d'autre dudit roulement (50).

13. Dispositif de serrage selon la revendication 12, caractérisé en ce que lesdits flasques (46, 48) sont engagés librement sur une bague extérieure (51) dudit roulement (50).

## Claims

1. Clamping arrangement for a bar of material (B), especially intended to fit out a headstock of a machining lathe, of the type comprising :
- clamping means including movable jaws (MS, MS') guided in a radial direction relative to the bar of material (B), such jaws (MS, MS') being capable of occupying at least two distinct radial positions referred to as closed and open in order respectively to clamp and release said bar (B),
- a mechanism (MF, MF') for closing said jaws adapted to provide said jaws with a grasping force intended to assure clamping of said bar (B),
- retaining means (MR) intended to maintain said jaws in their open position in the absence of force provided by the closing meachnism (MF, MF'), and
- control means (MP) for controlling, by a translation motion substantially coaxial to the bar (B), the operation of the closing mechanism (MF, MF') and of the retaining means (MR) such control means being freely mounted for rotation relative to said closing mechanism (MF, MF'),
characterized in that the closing mechanism (MF') includes a set rollers (24') having a basically filled-in structure and being respectively interposed between bearing elements (80) of the closing mechanism (MF') and the jaws and being able to be rolled therebetween by such mechanism when it is translated by the control means (MP), each of said rollers (24') cooperating with ramps (R', R'') respectively provided on the bearing elements (80) of such mechanism and on the jaws (MS, MS') to radially attract the jaws (MS, MS') and assure their clamping on the bar.

2. Clamping arrangement according to claim 1, characterized in that the ramps (R') of the jaws (MS, MS') are provided directly on the interior faces of the jaws which bear against the bar.

3. Clamping arrangement according to claim 1 or 2, characterized in that the ramp (R'') of each bearing element (80) is oriented parallel to the corresponding ramp (R') of the aforementioned jaw (MS, MS').

4. Clamping arrangement according to one of claims 1 to 3, characterized in that said ramps (R', R'') of the respective jaws (MS, MS') and bearing elements (80) are inclined along a negative slope towards the bar of material (B) in the direction of a machined region (RU) of such bar.

5. Clamping arrangement according to one of claims 1 to 4, characterized in that it includes adjusting means (82) to adjust the radial position of the bearing elements (80) relative to the bar (B).

6. Clamping arrangement according to claim 5, characterized in that the adjusting means (82) include a screw-nut system (82, 84).

7. Clamping arrangement according to any one of the preceding claims, characterized in that said bearing elements (80) are housed in a pressure ring (20') which surrounds such jaws (MS, MS').

8. Clamping arrangement according to any one of the preceding claims, characterized in that the bearing elements include tablets (80) on which are provided said ramps (R'').

9. Clamping arrangement according to claims 7 and 8, characterized in that said tablets are at least partially housed freely at the interior of the pressure ring (20').

10. Clamping arrangement according to claim 8 or 9, characterized in that said tablets exhibit lateral wings (86) on either side of their ramps (R'') intended to guide the displacement of the rollers (24') between their respective ramps (R', R'').

11. Clamping arrangement according to any one of the preceding claims, characterized in that the closing mechanism (MF, MF') includes abutments (88, 90) intended to limit the axial displacement of the rollers (24') on their ramps (R', R'') and to assure return of such rollers (24') to an initial position.

12. Clamping arrangement according to any one of the preceding claims, characterized in that the control means (MP) are made up from an actuator (V) of the pneumatically controlled type provided with a piston (36) and a cylinder (38), said piston (36) which is mounted to rotate freely relative to said jaws by means of a bearing (50), being constituted by two flanges (46, 48) mounted either side of said bearing (50).

13. Clamping arrangement according to claim 12, characterized in that said flanges (46, 48) are freely engaged on an outer race (51) of said bearing (50).

## Patentansprüche

1. Spannvorrichtung einer Materialstange (B), insbesondere bestimmt zur Ausrüstung des Spindelstocks einer Drehmaschine, von der Bauart, welche umfaßt:
- Spannmittel, umfassend bewegliche und in Radialrichtung relativ zu der Materialstange (B) geführte Spannbacken (MS, MS'), welche mindestens zwei charakteristische Radialpositionen einnehmen können, nämlich eine Schließposition bzw. eine Öffnungsposition, um die Stange (B) zu spannen bzw. freizugeben,
- einen Schließmechanismus (MF, MF') für die Spannbacken, ausgebildet zum Übertragen einer Eingriffskraft auf die Spannbacken, die dazu bestimmt ist, das Spannen der Stange (B) zu sichern,
- Haltemittel (MR), dazu bestimmt, die Backen in ihrer Öffnungsposition bei Fehlen der von dem Schließmechanismus (MF, MF') gelieferten Kraft zu halten, und
- Steuermittel (MP) zum Steuern mittels einer Translationsbewegung, die im wesentlichen koaxial zu der Stange (B) verläuft, der Betätigung des Schließmechanismus (MF, MF') und der Haltemittel (MR), welche Steuermittel (MP) frei drehbeweglich relativ zu dem Schließmechanismus (MF, MF') angeordnet sind,
dadurch gekennzeichnet, daß der Schließmechanismus (MF') eine Wälzkörpergruppe (24') im wesentlichen massiver Struktur umfaßt, eingefügt zwischen Andruckelementen (80) des Schließmechanismus (MF') und den Spannbacken und zwischen diesen mittels dieses Mechanismus abrollend, wenn er von den Steuermitteln (MP) verlagert wird, wobei jeder dieser Wälzkörper (24') mit Rampen (R', R'') zusammenwirkt, die auf den Andruckelementen (80) des Mechanismus bzw. auf den Spannbacken (MS, MS') ausgearbeitet sind, um die Spannbacken (MS, MS') radial vorzuspannen und ihr Spannen der Stange sicherzustellen.

2. Spannvorrichtung nach Anspruch 1, dadurch gekennzeichnet, daß die Rampen (R') der Spannbacken (MS, MS') direkt in Ausfluchtung mit Innenseiten der Backen, die sich auf der Stange abstützen, ausgearbeitet sind.

3. Spannvorrichtung nach Anspruch 1 oder 2, dadurch gekennzeichnet, daß die Rampe (R'') jedes Andrückelementes (80) parallel zu der entsprechenden Rampe (R') der vorgenannten Backen (MS, MS') orientiert ist.

4. Spannvorrichtung nach einem der Ansprüche 1 bis 3, dadurch gekennzeichnet, daß die Rampen (R',R'') der Spannbacken (MS, MS') bzw. der Andruckelemente (80) schräg mit einer negativen Steigung zu der Materialstange (B) in Richtung eines zu bearbeitenden Bereichs (RU) dieser Stange sind.

5. Spannvorrichtung nach einem der Ansprüche 1 bis 4, dadurch gekennzeichnet, daß sie Reguliermittel (82) zum Einregulieren der Radialposition von Andruckelementen (80) relativ zu der Stange (B) umfaßt.

6. Spannvorrichtung nach Anspruch 5, dadurch gekennzeichnet, daß die Reguliermittel (82) ein Schraubenmutternsystem (82, 84) umfassen.

7. Spannvorrichtung nach einem der vorangehenden Ansprüche, dadurch gekennzeichnet, daß die Andruckelemente (80) in einem Druckring (20') untergebracht sind, der die Spannbacken (MS, MS') umschließt.

8. Spannvorrichtung nach einem der vorangehenden Ansprüche, dadurch gekennzeichnet, daß die Andruckelemente Plättchen (80) umfassen, auf denen die Rampen (R'') ausgearbeitet sind.

9. Spannvorrichtung nach Ansprüchen 7 und 8, dadurch gekennzeichnet, daß die Plättchen mindestens teilweise frei im Inneren des Druckringes (20') untergebracht sind.

10. Spannvorrichtung nach Anspruch 8 oder 9, dadurch gekennzeichnet, daß die Plättchen seitliche Flügel (86) aufweisen, die beidseits der Rampen (R'') ausgearbeitet sind und zur Führung der Verlagerung der Wälzkörper (24') zwischen ihren entsprechenden Rampen (R', R'') dienen.

11. Spannvorrichtung nach einem der vorangehenden Ansprüche, dadurch gekennzeichnet, daß der Schließmechanismus (MF, MF') Anschläge (88, 90) umfaßt, dazu bestimmt, die Axialverlagerung der Wälzkörper (24') auf ihren Rampen (R', R'') zu begrenzen und die Rückkehr dieser Wälzkörper (24') in eine Ausgangsposition sicherzustellen.

12. Spannvorrichtung nach einem der vorangehenden Ansprüche, dadurch gekennzeichnet, daß die Steuermittel (MP) von einem Arbeitszylinder (V) pneumatischen Typs gebildet sind, versehen mit einem Kolben (36) und einem Zylinder (38), welcher Kolben (36) frei drehbar relativ zu den Spannbacken mittels eines Lagers (50) ist, und von zwei Flanschen (46, 48) gebildet ist, die beidseits des Lagers (50) montiert sind.

13. Spannvorrichtung nach Anspruch 12, dadurch gekennzeichnet, daß die Flansche (46, 48) frei auf einem Außenring (51) des Lagers (50) in Anlage sind.
